# EUROPÄISCHE PATENTSCHRIFT

(11) **EP 0 477 707 B1**
(45) Veröffentlichungstag und Bekanntmachung des Hinweises auf die Patenterteilung: **13.07.1994**
(21) Anmeldenummer: 91115641.2
(22) Anmeldetag: 14.09.1991
(51) Int. Cl.: F16B 7/00, F16B 7/18

(54) **Verbindungseinrichtung für ein insbesondere rohrförmiges Bauteil**
Connecting device particularly for a tubular member
Dispositif d'assemblage notamment pour d'une pièce de construction tubulaire

(30) Priorität: 27.09.1990 DD 344253
(43) Veröffentlichungstag der Anmeldung: 01.04.1992
(73) Patentinhaber: HEWI Heinrich Wilke GmbH, D-34454 Arolsen (DE)
(72) Erfinder: Dziuk, Richard, W-3548 Arolsen (DE); Wulfert, Karl-Ludwig, W-3544 Waldeck (DE); Jäger, Horst, W-3593 Edertal-Buhlen (DE)
(74) Vertreter: Freiherr von Schorlemer, Reinfried, Dipl.-Phys.

(56) Entgegenhaltungen:
- DE-A- 2 460 382
- DE-A- 2 460 589
- DE-A- 2 632 696
- DE-A- 3 409 866
- DE-C- 864 783

## Beschreibung

Die Erfindung betrifft eine Verbindungseinrichtung der im Oberbegriff des Anspruchs 1 angegebenen Gattung.

Verbindungseinrichtungen dieser Art dienen vor allem zur Verbindung der Bauteile von baukastenartig aus Rohr- oder Stangen- und Knotenelementen bestehenden Rohr- bzw. Stangensystemen. Aus den Elementen des Baukastens können z.B. Dekorations- oder Möbelgestelle, Messe- und Ausstellungsstände, Rahmen, Pendeltürgriffe, Griffstangen, Möbelstücke, Geländer oder Handläufe und zahlreiche andere Gebilde zusammengesetzt werden. Alternativ können die Verbindungseinrichtungen aber auch zur Verbindung anderer Bauteile verwendet werden, sofern diese mit Aufnahmeöffnungen versehene Anschlußenden aufweisen.

Zur Montage der verschiedenen Elemente eines derartigen Rohr- oder Stangensystems werden heute allgemein Verbindungseinrichtungen angewendet (DE-A-26 32 696, DE-A-34 09 866), die in die Aufnahmeöffnungen eingesetzte, an Füllstücken, Buchsen od. dgl. ausgebildete Gewindeteile aufweisen, die mit einem komplementären, im anderen Bauteil vorgesehenen Gewindeteil verschraubt werden. Derartige Verbindungseinrichtungen erfordern entweder eine spezielle Vorbehandlung der Anschlußenden, z.B. die Anbringung einer Einziehung, einer Einstechung, einer Bördelung od. dgl., oder müssen in den Anschlußenden durch Verstiftung, Verklebung, Vernietung od. dgl. befestigt werden. Dabei dienen häufig aus Kunststoffummantelungen herausragende Teile von Metalleinlagen als Zentrierstücke.

Eine Folge davon ist, daß die Rohr- und Knotenelemente bereits in der Fabrik auf die im Einzelfall erforderliche oder gewünschte Länge geschnitten und mit den Verbindungseinrichtungen fest verbunden werden.

Aufgrund der vielseitigen Anwendungsmöglichkeiten solcher Systeme kann es vorkommen, daß Rohr- oder Stangenelemente eine geringfügig größere oder kleinere Länge haben, als tatsächlich erforderlich oder aufgrund von schon angebrachten Montagelöchern oder anderen Befestigungspunkten erwünscht ist. Da die Verbindungseinrichtungen fest in den Anschlußenden verankert sind, können solche Rohr- oder Stangenelemente an der Baustelle in der Regel nicht auf eine andere Länge abgeschnitten oder verlängert werden. Zur Verkürzung wäre es nämlich erforderlich, zunächst die komplette Verbindungseinrichtung zerstörungsfrei aus dem Anschlußende zu entfernen, was nicht immer möglich ist, anschließend die Kunststoffummantelung von der Stahleinlage abzuziehen, was mit Schwierigkeiten verbunden ist, weil sie zur Herstellung eines drehfesten Sitzes meistens mit hoher Pressung auf die Metalleinlagen aufgezogen ist, dann die Kunststoffummantelung und die Metalleinlage auf die erforderliche Länge zu schneiden und erneut miteinander zu verbinden, und schließlich eine ggfs. neue Verbindungseinrichtung im Anschlußende zu befestigen. Zur Verlängerung wäre es dagegen erforderlich, ein kurzes Rohrstück zusätzlich einzufügen, wozu aus statischen Gründen eine zusätzliche Zentrierhülse benötigt würde, sofern die Länge des Gewindeteils der vorhandenen Verbindungseinrichtung eine derartige Verlängerung überhaupt zuläßt.

Da wegen fehlender Werkzeuge und Ersatzteile derartige Arbeiten an der Baustelle meistens nicht durchführbar sind, ist es in solchen Fällen üblich, beim Hersteller ein neues Rohr- oder Stangenelement mit der erforderlichen oder gewünschten Länge anzufordern. Die dadurch an der Baustelle auftretenden Verzögerungen bei der Montage müssen in Kauf genommen werden.

Angesichts dieses Problems besteht ein erheblicher Bedarf an Verbindungseinrichtungen, die an der Baustelle mit einfachsten Mitteln, schnell und zerstörungsfrei aus den Anschlußenden entfernt und wieder in diese eingesetzt werden können und nach Möglichkeit so gestaltet sind, daß beim Verkürzen eines Rohr- oder Stangenelements ein Abziehen der Kunststoffummantelung von der Metalleinlage nicht erforderlich ist und beim Verlängern eines Rohr- oder Stangenelements keine zusätzliche Zentrierhülse benötigt wird.

Bekannte Verbindungseinrichtungen, mit denen dieses Problem im Prinzip gelöst werden könnte, sind aus verschiedenen Gründen bei den hier interessierenden Rohr- oder Stangensystemen nicht anwendbar.

Bei einer bekannten Verbindungseinrichtung der eingangs bezeichneten Gattung (DE-C-864 783) besteht das Spreizteil aus dem Kopf, das Gewindeteil aus dem Gewindeschaft und das Mittel zum Ansetzen eines Werkzeugs aus einem Vierkantabschnitt einer Schraube. Eine Verspannung des als schmaler Ring ausgebildeten spreizbaren Teils in dem Anschlußende des einen Bauteils ist nur dadurch möglich, daß gleichzeitig die Schraubverbindung zwischen dem Bauteil und einem anderen Bauteil hergestellt wird, indem der Gewindeschaft der Schraube mittels eines Werkzeugs in ein mit Innengewinde versehenes Anschlußende des anderen Bauteils eingedreht wird. Dabei kann das Werkzeug unmittelbar am dazu vorgesehenen Mittel oder mittelbar an einer auf den Vierkantabschnitt aufgesetzten, ein entsprechendes Vierkantloch aufweisenden Scheibe angesetzt werden. Bei dieser Konstruktion ist es daher nicht möglich, die Verbindungseinrichtung vor Herstellung der Schraubverbindung an einem der beteiligten Bauteile zu befestigen. Dadurch ist eine Vormontage z.B. im Werk unmöglich, was lange Montagezeiten an der Baustelle erforderlich macht. Außerdem müssen bei der Lagerhaltung, beim Transport usw. viele lose Einzelteile berücksichtigt werden. Weiterhin muß in Kauf genommen werden, daß die Bauteile nicht unmittelbar aneinandergrenzen, sondern entweder durch einen den Vierkantabschnitt freilassenden Spalt oder die darauf aufgezogene Scheibe getrennt sind. Abgesehen davon dürfte die mit einem Schraubenkopf aufbringbare Radialkraft aus statischen Gründen bei den meisten praktischen Anwendungsfällen viel zu klein sein, zumal der Schraubenkopf mit dem spreizbaren Teil nur Linienberührung hat. Zur Verlängerung sind außerdem zusätzliche Zentrierstücke erforderlich.

Eine andere bekannte, für den genannten Zweck ebenfalls prinzipiell geeignete Verbindungseinrichtung (FR-A-1 101 663) weist diese Nachteile teilweise nicht auf. Bei dieser Verbindungseinrichtung sind jedoch anstelle des Spreizteils und des spreizbaren Teils zwei nach Art von Tellerfedern ausgebildete Unterlegscheiben vorgesehen, die mittels eines Gewindebolzens gegeneinander gezogen und dadurch aufgeweitet und im Anschlußende verspannt werden. Daher lassen sich keine großen Kräfte übertragen, so daß diese Verbindungseinrichtung aus statischen Gründen insbesondere nicht für Geländer, Brüstungen od. dgl. geeignet ist. Außerdem dürfte es bei diesen Verbindungseinrichtungen zumindestens bei runden Querschnitten unmöglich sein, die beiden Unterlegscheiben gegeneinander zu ziehen bzw. im Anschlußende zu verspannen, weil sie sich, selbst wenn rauhe Oberflächen vorhanden sind, mit dem Gewindebolzen mitdrehen werden und dadurch die gewünschte Verspannung verhindern. Weiterhin ist die Verbindungseinrichtung äußerst empfindlich gegenüber auf den Bolzen ausgeübte "Kippkräfte". Hinzu kommt, daß diese Verbindungseinrichtung auch den wesentlichen Nachteil aufweist, daß sie nur einmal verwendbar ist. Da sich die Unterlegscheiben bei der Herstellung der Verspannung verformen und in die Rohrwandung eingraben, sind sie nach dem Lösen einer einmal hergestellten Verbindung und Herausnahme aus dem Anschlußende unbrauchbar. Schließlich dürften derartige Verbindungseinrichtungen kaum für die Herstellung solcher Gebilde brauchbar sein, die ein auch im Brandfall erhalten bleibendes, tragendes Metallskelett aufweisen müssen, weil sich die dünnen Unterlegscheiben bei größerer Hitze verformen und dadurch die Schraubverbindung aufheben.

Der Erfindung liegt daher die Aufgabe zugrunde, die Verbindungseinrichtung der eingangs bezeichneten Gattung dadurch zu verbessern, daß sie ohne Zuhilfenahme eines anderen Bauteils im Anschlußende montierbar und zerstörungsfrei demontierbar ist und dadurch insbesondere ein einfaches Verkürzen oder Verlängern der beteiligten Bauteile ermöglicht. Daneben soll es möglich sein, die Anschlußenden der Bauteile entweder unter Bildung einer Stoßfuge unmittelbar oder unter Zwischenschaltung eines dritten, rohrförmigen Bauteils und Bildung einer weiteren Stoßfuge mittelbar miteinander zu verbinden.

Zur Lösung dieser Aufgabe dienen die kennzeichnenden Merkmale des Anspruchs 1.

Durch die Erfindung ergeben sich zahlreiche wesentliche Vorteile.

Die Verbindungseinrichtung kann z.B. vor der Verbindung von zwei Bauteilen in einem Anschlußende eines der Bauteile fest verankert und daher im Werk vormontiert werden. Die Verbindungseinrichtung kann aber dennoch sowohl im Werk als auch an der Baustelle leicht wieder demontiert und z.B. nach Verkürzung des Bauteils erneut montiert werden. Auch eine begrenzte Verlängerung des Bauteils ist möglich, indem zusätzlich ein kürzeres Rohrelement zwischengeschaltet und die Verbindungseinrichtung bei Bedarf im zugehörigen Anschlußende geringfügig axial nach vorn vorgeschoben wird. Schließlich ergibt sich für den Hersteller und den Betreiber der Baukastensysteme der Vorteil, daß die Bauteile, insbesondere Rohrelemente, mit einer geringfügigen Überlänge bestellt und/oder ausgeliefert und an der Baustelle auf die im Einzelfall gewünschte Länge abgeschnitten werden können. Wird dabei die Verbindungseinrichtung in weiterer Ausgestaltung der Erfindung zusätzlich mit einem als Zentrierstück geeigneten Ansatz versehen, kann das Ablängen der Bauteile ohne weiteres auch ohne vorherige Demontage der Kunststoffummantelung von der Metalleinlage erfolgen. Daneben ist es selbstverständlich möglich, die Rohr- oder Stangen- und Knotenelemente wie bisher unter Bildung feiner Stoßfugen und oberflächenbündig so zu verbinden, daß schon aus geringer Entfernung keinerlei Unstetigkeiten an den Verbindungsstellen sichtbar sind.
Weitere vorteilhafte Merkmale der Erfindung ergeben sich aus den Unteransprüchen.

Die Erfindung wird nachfolgend in Verbindung mit der beiliegenden Zeichnung an Ausführungsbeispielen näher erläutert. Es zeigen:
Fig. 1 bis 3 ein spreizbares Teil einer Verbindungseinrichtung nach einer ersten Ausführungsform der Erfindung in einer Vorderansicht, im Längsschnitt und in der Unteransicht etwa im Maßstab 2:1;
Fig. 4 und 5 einen Bolzen der Verbindungseinrichtung in einer Vorderansicht und in der Draufsicht, ebenfalls etwa im Maßstab 2:1;
Fig. 6 einen Längsschnitt durch ein Spreizteil der Verbindungseinrichtung, ebenfalls etwa im Maßstab 2:1;
Fig. 7 die Verbindungseinrichtung nach Fig. 1 bis 6 nach ihrem Einbau in ein Anschlußende eines Bauteils im Längsschnitt;
Fig. 7A und 7B der Fig. 7 entsprechende Ansichten nach Verkürzung bzw. Verlängerung des mit der Verbindungseinrichtung verbundenen Bauteils;
Fig. 8 bis 11 jeweils verschiedene Ausführungsformen von Bauteilen, die mittels der Verbindungseinrichtung nach Fig. 1 bis 6 durch eine unsichtbare Schraubverbindung miteinander verbunden sind, jeweils im Längsschnitt und in einem gegenüber Fig. 1 bis 7B verkleinertem Maßstab;
Fig. 12 einen Längsschnitt durch eine in ein Bauteil eingesetzte Verbindungseinrichtung gemäß einer zweiten Ausführungsform der Erfindung, etwa im Maßstab 2:1;
Fig. 13 bis 15, Fig. 16 bis 18 und Fig. 19 bis 21 jeweils in den Fig. 4, 5 und 7 entsprechenden Ansichten je eine Verbindungseinrichtung gemäß einem weiteren Ausführungsbeispiel der Erfindung;
Fig. 22 eine Ansicht entsprechend Fig. 7 eines weiteren Ausführungsbeispiels der erfindungsgemäßen Verbindungseinrichtung;
Fig. 23 bis 25 den Fig. 1 bis 3 entsprechende Ansichten eines spreizbaren Teils gemäß einem weiteren Ausführungsbeispiel der Erfindung;
Fig. 26 und 27 eine Vorderansicht und die Draufsicht eines zum spreizbaren Teil nach Fig. 23 bis 25 passenden Spreizteils;
Fig. 28 eine der Fig. 7 entsprechende Ansicht der Verbindungseinrichtung bei Anwendung der Teile nach Fig. 23 bis 27; und
Fig. 29 bis 31 eine alternative Ausführungsform für den Bolzen nach Fig. 4 und 5.

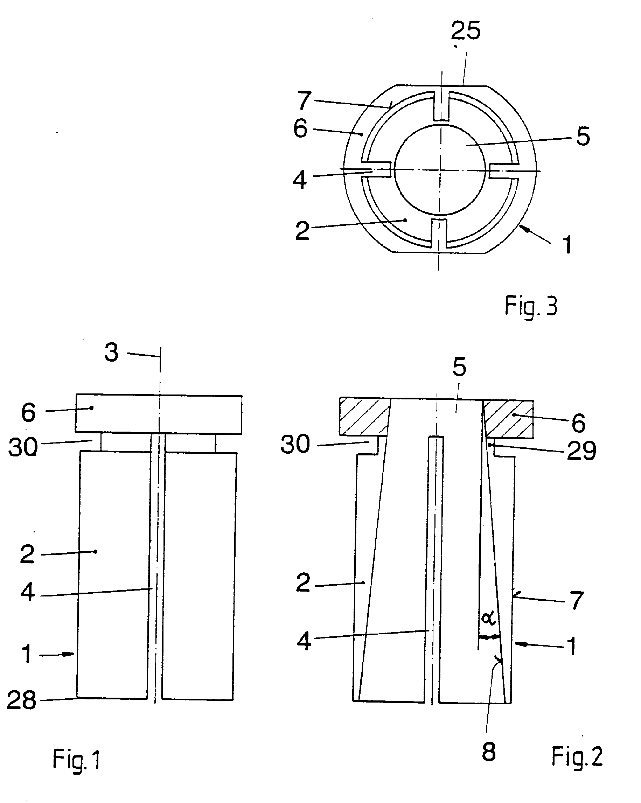

Nach Fig. 1 bis 3 enthält die Verbindungseinrichtung ein spreizbares, hülsenartig ausgebildetes Teil 1, das eine Mehrzahl von (hier vier) vorzugsweise identischen Segmenten 2 enthält, die durch parallel zu einer Längsachse 3 verlaufende, vorzugsweise um gleiche Winkel beabstandete Schlitze 4 getrennt sind. Die Segmente 2 weisen Außenflächen auf, die auf einer Zylinderfläche liegen und sich hier über etwas weniger als ein Viertel dieser Zylinderfläche erstrecken. Dagegen liegen die Innenflächen der Segmente 2 auf einer Konusfläche und erstrecken sich über etwas weniger als ein Viertel derselben. Dabei sind die Vorderenden der Segmente 2 mit einem geschlossenen, ein Mittelloch 5 aufweisenden Ring 6 derart verbunden, daß alle Außenflächen im wesentlichen eine gemeinsame, nur durch die Schlitze 4 getrennte, zylindrische äußere Mantelfläche 7 und ihre Innenflächen entsprechend eine gemeinsame, konische innere Mantelfläche 8 mit der Längsachse 3 als Achse bilden. Der Durchmesser der äußeren Mantelfläche 7 ist etwas kleiner als der Durchmesser einer Ausnehmung, in welcher das spreizbare Teil 1 befestigt werden soll. Die innere konische Mantelfläche 8 weist einen vom Hinterende in Richtung des vom Ring 6 gebildeten Vorderendes allmählich kleiner werdenden Durchmesser auf, wobei der Steigungswinkel α vorzugsweise nur wenige Grad, z.B. 5° beträgt.

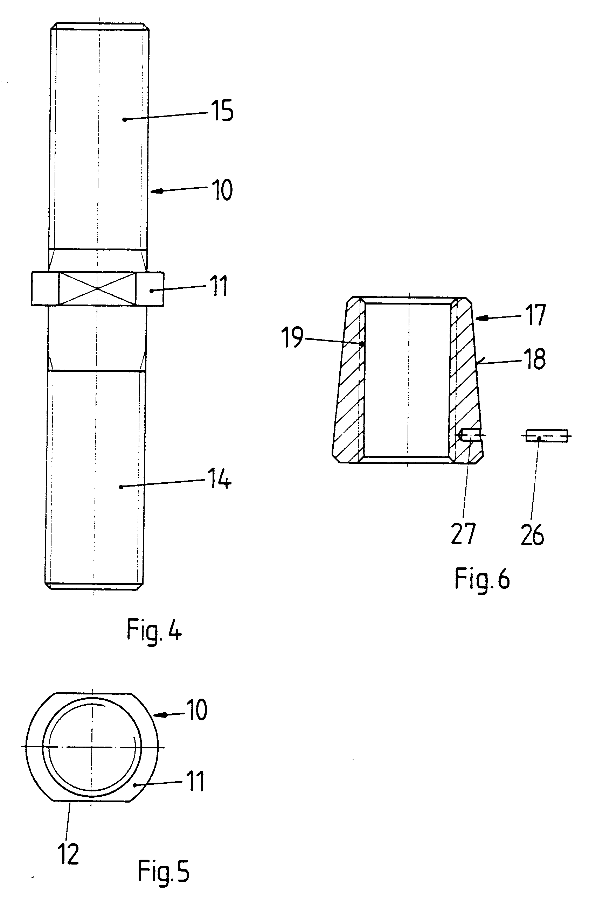

Die Verbindungseinrichtung enthält nach Fig. 4 und 5 weiter einen Bolzen 10 mit einem Element 11, das in noch zu erläuternder Weise das Verspannen des Teils 1 in einer Ausnehmung vor dem Herstellen der Verbindung zwischen zwei Bauteilen ermöglicht und zweckmäßig in einem mittleren Teil des Bolzens 10 angeordnet ist. Im Ausführungsbeispiel ist das Element 11 ein starr am Bolzen 10 angebrachter Ansatz, vorzugsweise in Form eines umlaufendes Bundes. Das Element 11 weist zweckmäßig einen zum Ansetzen eines Werkzeugs, insbesondere Schraubenschlüssels geeigneten Querschnitt auf, indem es z.B. zwischen zylindrischen Außenflächen mit Abflachungen 12 versehen ist. Allerdings könnte ein zum Ansetzen eines Werkzeugs bestimmtes Mittel auch an einer anderen Stelle des Bolzens, z.B. an seinem Vorderende, vorgesehen sein. Beidseitig des Elements 11 ist der Bolzen 10 mit einem ersten Außengewindeabschnitt 14 und einem zur Herstellung der Verbindung dienenden Gewindeteil 15 in Form eines zweiten Außengewindeabschnitts versehen. Dabei sind im Ausführungsbeispiel der Außenquerschnitt des Elements 11 etwas größer und der Außendurchmesser des Außengewindeabschnitts 14 etwas kleiner als der Innenquerschnitt des Mittellochs 5 des Rings 6 (Fig. 3).

Ein im wesentlichen hohlzylindrisches Spreizteil 17 der Verbindungseinrichtung ist nach Fig. 6 so geformt, daß es zumindest teilweise in das spreizbare Teil 1 einführbar ist. Zwecks Erzeugung einer ausreichend großen Flächenpressung ist das Spreizteil 17 mit einer äußeren konischen Spreizfläche 18 versehen, die im wesentlichen dieselbe Steigung wie die innere konische Mantelfläche 8 des spreizbaren Teils 1 (Steigungswinkel α in Fig. 2) und einen Durchmesser aufweist, der von ihrem Hinterende in Richtung des Vorderendes allmählich abnimmt. Dabei ist der kleinste Durchmesser etwas kleiner als der größte Durchmesser der inneren Mantelfläche 8 des spreizbaren Teils 1 und das Größenverhältnis vorzugsweise so gewählt, daß die äußere Spreizfläche 18 des Spreizteils 17 wenigstens etwa mit der Hälfte der Mantelfläche 8 in Berührung gebracht werden kann, so daß eine großflächige Wechselwirkung zwischen beiden Teilen 1 und 17 stattfindet. Beim Ausführungsbeispiel ist das Spreizteil 17 außerdem mit einem in Achsrichtung durchgehenden Innengewindeabschnitt 19 versehen, in den der erste Außengewindeabschnitt 14 des Bolzens 10 einschraubbar ist.

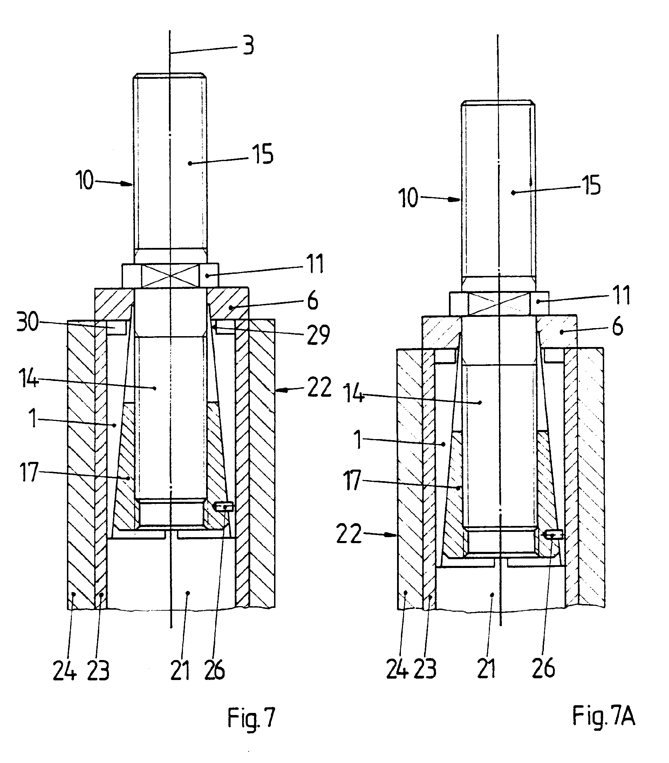

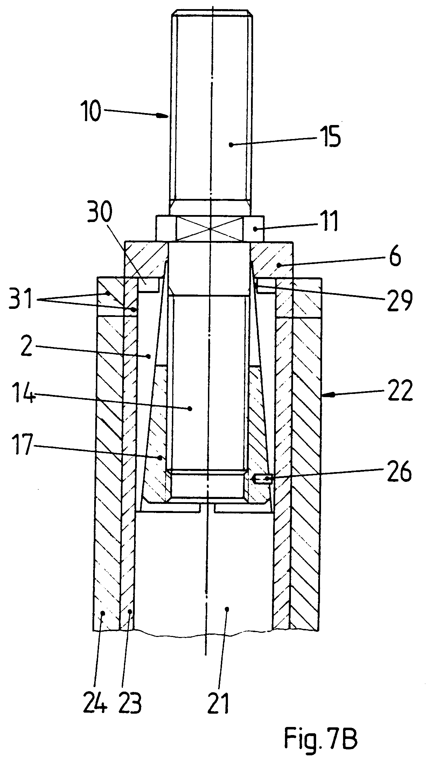

Fig. 7 zeigt die Verbindungseinrichtung im montierten Zustand in einer stirnseitigen, zylindrischen Ausnehmung 21 eines Bauteils 22, das im Ausführungsbeispiel aus einem Rohrelement mit einer hohlzylindrischen Metalleinlage 23 und einer auf diese aufgezogenen, ebenfalls hohlzylindrischen Kunststoffummantelung 24 besteht, die beide koaxial zur Längsachse 3 des spreizbaren Teils 1 und koaxial zu den Längsachsen des Bolzens 10 und des Spreizteils 17 angeordnet sind. Die Montage erfolgt dadurch, daß zunächst das Spreizteil 17 vom Hinterende her in das spreizbare Teil 1 geschoben, dann der Außengewindeabschnitt 14 von der Vorderseite her durch das Mittelloch 5 des Rings 6 hindurch lose in das Spreizteil 17 eingeschraubt und danach das spreizbare Teil 1 in die Ausnehmung 21 eingeführt wird. Abschließend wird der Bolzen 10 mittels eines am Element 11 angesetzten Werkzeugs festgezogen, wodurch das Spreizteil 17 immer tiefer in das spreizbare Teil 1 hineingezogen wird und dessen Segmente 2 radial nach außen gegen den zylindrischen Innenmantel der Metalleinlage 23 gedrückt werden. Die dabei auf den Bolzen 10 ausgeübte Zugkraft wird über die Spreizfläche 18 direkt auf die mit ihr zusammenwirkende Fläche 8 des spreizbaren Teils 1 übertragen und damit in eine quer zur Zugrichtung wirkende Kraft umgewandelt, so daß sich auch bei glatten Flächen hohe Klemmkräfte erzielen lassen. Ohne das als Widerlager wirksame Element 11, das sich am Ring 6 abstützt, sich alternativ aber auch zunächst am Vorderende der Metalleinlage 23 oder einem zusätzlich zwischen ihm und dem Ring 6 befindlichen Teil abstützen könnte, würde sich der Außengewindeabschnitt 14 lediglich immer mehr in das Spreizteil 17 eindrehen, ohne dieses gegen das zu spreizende Teil 1 ziehen zu können. Durch das Element 11 wird beim Verspannen eine feste axiale Lage des Bolzens 10 relativ zum Teil 1 sichergestellt.

Um die Verbindungseinrichtung unter einer Vielzahl von denkbaren Betriebszuständen sicher in der Ausnehmung 21 befestigen zu können, sind vorzugsweise einige zusätzliche Hilfsmittel vorgesehen.

Zunächst wäre es, insbesondere bei glatten Innenflächen der Metalleinlage 23 und glatten Außenflächen des spreizbaren Teils 1 denkbar, daß das spreizbare Teil 1 und das Spreizteil 17 beim Drehen des Bolzens 10 einfach als Einheit in der Ausnehmung 21 mitgedreht werden. Um dieses zu verhindern, wird der Ring 6 zweckmäßig mit einem Werkzeug, z.B. einer Zange, festgehalten. Zur Erleichterung dieses Vorgangs ist der Ring 6 oder ein anderer, radial nach außen ragender Ansatz des spreizbaren Teils 1 so bemessen, daß er sich nach dem Einsetzen des Teils 1 in die Ausnehmung 21 auf deren Vorderende bzw. auf das Vorderende der Metalleinlage 23 auflegt und dadurch die normale Lage der Verbindungseinrichtung im Bauteil 22 fixiert. Außerdem kann dieser Ansatz oder der Ring 6 mit einem das Ansetzen eines Werkzeugs, z.B. eines Schraubenschlüssels, geeigneten Querschnitt versehen sein und beispielsweise wie das Element 11 seitliche Abflachungen 25 (Fig. 3) aufweisen. Alternativ könnten die äußere Mantelfläche des spreizbaren Teils 1 und/oder die innere zylindrische Mantelfläche der Metalleinlage 23 aber auch ausreichend aufgerauht sein, um ein Mitdrehen des spreizbaren Teils 1 wenigstens dann zu verhindern, wenn es durch das Spreizteil 17 schon etwas vorgespannt ist.

Um ein Mitdrehen nur des Spreizteils 17 mit dem Bolzen 10 zu vermeiden, ist die Verbindungseinrichtung mit einem Mittel versehen, das derartige Drehungen verhindert. Dieses Mittel besteht z.B. aus einer in axialer Richtung wirksamen Nut/Feder-Verbindung, mittels derer das Spreizteil 17 drehfest im spreizbaren Teil 1 gelagert ist und die beispielsweise aus einem der Schlitze 4 (Fig. 1) und einem seitlichen, radial abstehenden und in diesen Schlitz 4 ragenden Stift 26 (Fig. 6 und 7) gebildet ist, der z.B. in eine Bohrung 27 des Spreizteils 17 eingeschlagen wird. Entsprechend ist die Wirkung des Rings 6 und der Nut/Feder-Verbindung, wenn die Verbindungseinrichtung wieder demontiert werden soll.

Wie Fig. 7A zeigt, kann das Bauteil 22 auf einfache Weise gekürzt werden. Hierzu wird der Bolzen 10 geringfügig losgedreht, wobei sich das Element 11 etwas vom Ring 6 abhebt, und dann dem Bolzen 10 ein Schlag in axialer Richtung versetzt, wodurch das Spreizteil 17 im spreizbaren Teil 1 axial verschoben wird, bis das Element 11 wieder auf dem Ring 6 aufliegt. Dadurch ist die Verspannung gelöst, und die ganze Verbindungseinrichtung kann nun aus der Ausnehmung 21 herausgezogen werden. Das Bauteil 22 wird dann, wie in Fig. 7A angedeutet ist, an seinem Vorderende etwas verkürzt, und anschließend wird die Verbindungseinrichtung wieder eingesetzt. Da sie danach wieder dieselbe relative Lage zum Vorderende des Bauteils 22 einnimmt, ergeben sich auch dieselben statischen Verhältnisse. Voraussetzung ist dabei natürlich, daß die Ausnehmung 21 lang genug ist, um auch nach der Verkürzung die Teile 1,17 aufnehmen zu können.

Das Bauteil 22 kann auch auf einfache Weise verlängert werden. Hierzu wird ein kurzes, ebenfalls aus einer Metalleinlage und einer Kunststoffummantelung bestehendes, rohrförmiges Bauteil 31 koaxial auf das Vorderende des Bauteils 22 aufgelegt und danach die Verbindungseinrichtung eingesetzt und in der beschriebenen Weise befestigt. Dabei kommt ein Vorderabschnitt des spreizbaren Teils 1 im Bauteil 22 zu liegen, so daß das Teil 1 gleichzeitig als Zentrierelement wirkt. Die axiale Länge des spreizbaren Teils 1 ist daher vorzugsweise so groß, z.B. wenigstens ca. 40 mm, daß ein Teil dieser Länge für etwa notwendige Verlängerungen verwendet werden kann, ohne daß die mechanische Stabilität aufgrund des kürzeren, im Bauelement 22 verbleibenden Abschnitts des Teils 1 wesentlich abnimmt. Alternativ wäre es natürlich auch möglich, zusätzliche Verbindungseinrichtungen mit besonders großer Länge herzustellen, die speziell der Verlängerung von Bauteilen dienen.

Zur Herstellung von Verbindungen, die hohen statischen Anforderungen entsprechen müssen, z.B. bei Geländern, Brüstungen od. dgl., bestehen das spreizbare Teil 1, der Bolzen 10 und das Spreizteil 17 vorzugsweise aus Stahl. Dadurch wird sichergestellt, daß die Verbindungseinrichtungen in Kombination mit den Metalleinlagen 23 ein auch im Brandfall erhalten bleibendes Skelett bilden. Um dabei zu vermeiden, daß die Außenflächen der Segmente 2 beim Spreizvorgang im wesentlichen nur mit ihren Hinterenden 28 (Fig. 1) und daher nur mit Linien- oder sogar Punktberührung im jeweiligen Anschlußende verklemmt werden, sind die Segmente 2 an ihren Vorderenden vorzugsweise mit Hilfe von verformbaren Teilen 29 mit dem Ring 6 verbunden. Diese verformbaren Teile 29 bestehen vorzugsweise aus dünnen Verbindungsstegen oder Wandabschnitten, die dadurch entstehen, daß zwischen dem Ring 6 und der von den Segmenten 2 gebildeten äußeren Mantelfläche 7 durch Drehen oder Fräsen eine Rille 30 bzw. Nut (Fig. 1 und 2) ausgebildet wird, die bis dicht an die innere Mantelfläche 8 heranreicht. Wird bei dieser Anordnung entsprechend Fig. 7 durch Festziehen des Bolzens 10 ein radialer Druck erzeugt, dann können die Segmente 2 unter Verbiegung der verbiegbaren Teile 29 praktisch auf ihrer ganzen Länge gegen die zylindrische Innenwand der Metalleinlage 23 gepreßt werden, so daß aufgrund des großflächigen Kontakts und der damit verbundenen großen Flächenpressung die erwünschte große Reibkraft auch dann erzeugt wird, wenn die zusammenwirkenden Flächen glatt sind.

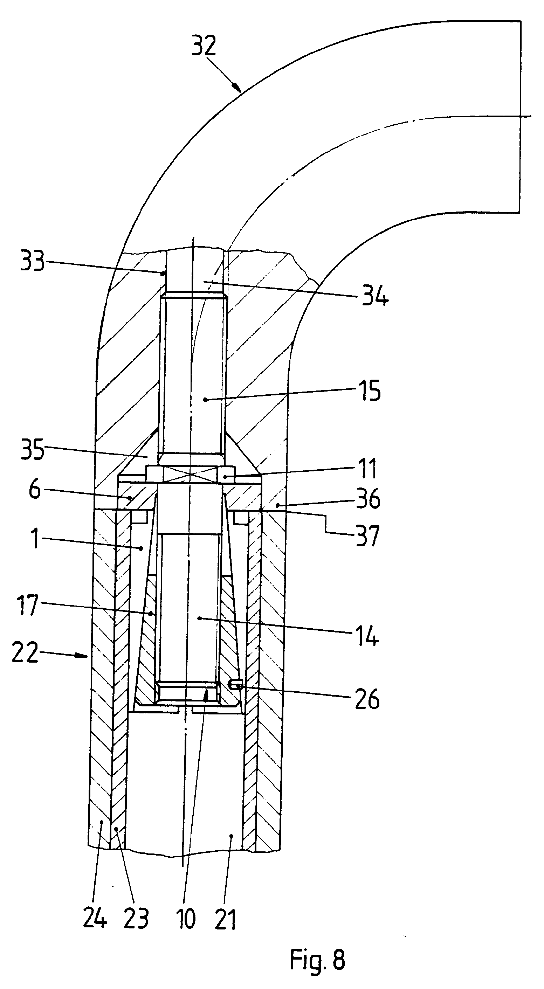

Nachdem die Verbindungseinrichtung im Bauteil befestigt ist, kann dieses auf herkömmliche Weise mit einem anderen Bauteil 32 (Fig. 8) verbunden werden, das z.B. aus einem bogenförmigen, aus Kunststoff hergestellten Knotenelement besteht, das ein koaxial zum Bauteil 22 ausrichtbares Ende und eine darin ausgebildete, mit einem Innengewindeabschnitt 33 versehene Ausnehmung 34 aufweist, in die das Gewindeteil 15 des Bolzens 10 eingedreht werden kann (DE-A-26 32 696). Die Ausnehmung 34 weist an ihrem Vorderende außerdem eine das Element 11 aufnehmende Erweiterung 35 auf.

Um das Bauteil 32 koaxial zum Bauteil 22 zentrieren zu können, ist der Ring 6 vorzugsweise gleichzeitig als Zentrierstück ausgebildet und mit einem Außenquerschnitt versehen, der bis auf die Abflachungen 25 dem Innenquerschnitt desjenigen Wandabschnitts 36 am Vorderende des Bauteils 32 entspricht, der durch die Ausbildung der Erweiterung 35 entstanden ist. Die axiale Länge dieses Wandabschnitts 36 wird so groß bemessen, daß der Ring 6 und das Element 11 auch bei Bildung einer haarfeinen Stoßfuge 37 in der Erweiterung 35 Platz finden.

Wie ein Vergleich der Fig. 7A, 7B und 8 zeigt, hat die beschriebene Ausgestaltung des Rings 6 sowohl als Zentrierstück als auch als Ansatz, der sich auf das Bauteil 22 auflegt, den Vorteil, daß diese Funktion auch nach dem Verkürzen oder Verlängern des Bauteils 22 erhalten bleibt. Dadurch wird beim Verlängern kein zusätzliches Zentrierstück erforderlich. Weil bei dieser Anordnung außerdem kein aus der Kunststoffummantelung 24 herausragender Abschnitt der Metalleinlage 23 als Zentrierstück benötigt wird, ergibt sich der weitere wesentliche Vorteil, daß die Metalleinlage 23 und die Kunststoffummantelung 24 dieselbe axiale Länge erhalten und gemeinsam an die Stoßfuge 37 grenzen können. Hierdurch ist es möglich, die Bauteile 22 ohne vorherige Trennung der Kunststoffummantelung 24 von den Metalleinlagen 23 zu verkürzen oder entsprechend Fig. 7B mittels einfacher Zwischenstücke zu verlängern.

Unabhängig davon ist es möglich, die Bauteile 22 in bekannter Weise zu verspannen, indem z.B. das in Fig. 7 und 8 nicht sichtbare andere Ende des Rohrelements mittels einer entsprechenden Verbindungseinrichtung mit einem dem Bauteil 32 entsprechenden weiteren Bauteil verschraubt und dann die verschiebbar auf der Metalleinlage 23 sitzende Kunststoffummantelung 24 durch Annähern der beiden Knotenelemente gestaucht wird, indem sich deren Wandabschnitte 36 nur auf die Kunststoffummantelung 24 auflegen. Alternativ oder zusätzlich könnten aber auch die Wandabschnitte 36 ausreichend dünn ausgebildet werden und bei der Verspannung als verformbare Teile wirken.

Beim Losdrehen der aus Fig. 8 ersichtlichen Verbindung könnte unter ungünstigen Umständen der Bolzen 10 mit dem Bauteil 32 mitdrehen und sich dadurch vom Spreizteil 17 lösen. Ein unbeabsichtigt auf das Spreizteil 17 ausgeübter Schlag könnte dann zur Folge haben, daß dieses im Bauteil 22 herabfällt. Ist dessen anderes Ende z.B. im Erdboden einbetoniert, wäre das Spreizteil 17 verloren. Ein derartiges Lösen des Spreizteils wird in weiterer Ausgestaltung der Erfindung dadurch verhindert, daß es unverlierbar mit dem spreizbaren Teil 1 verbunden wird, indem bei diesem einer der Schlitze 4 an seinem Hinterende verschlossen und der Stift 26 erst nach dem Einsetzen des Spreizteils 17 in das spreizbare Teil 1 eingeschlagen wird. Ein Herabfallen der ganzen Verbindungseinrichtung wird durch die Auflage des Rings 6 auf der Metalleinlage 23 verhindert.

Eine in der Herstellung einfachere Variante hierzu besteht darin, daß an den Hinterenden 28 der Segmente 2 kleine, radial nach innen ragende Nasen angebracht werden. Beim Einlegen des Spreizteils 17 werden die Hinterenden der Segmente 2 radial so stark gespreizt, daß das Spreizteil 17 über die Nasen in das spreizbare Teil 1 geschoben werden kann. Danach federn die Hinterenden 28 zurück und verriegeln das Spreizteil 17 im spreizbaren Teil 1, was insbesondere auch für den montierten Zustand gilt, so daß das Spreizteil 17 unverlierbar in der Verbindungseinrichtung gehalten ist.

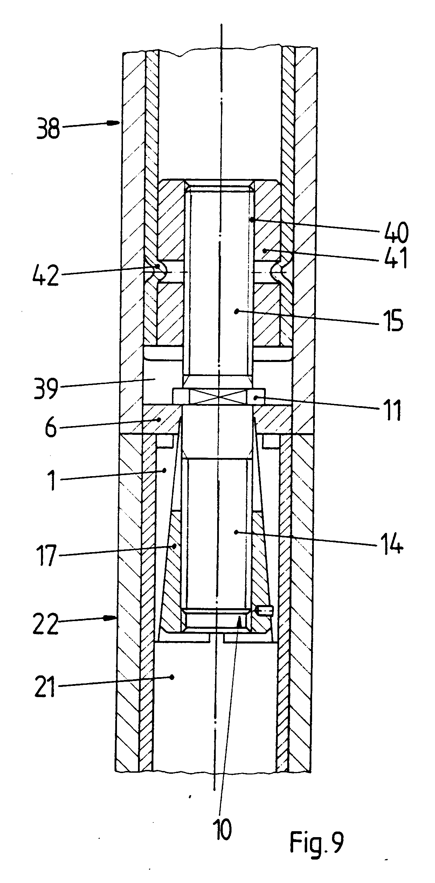

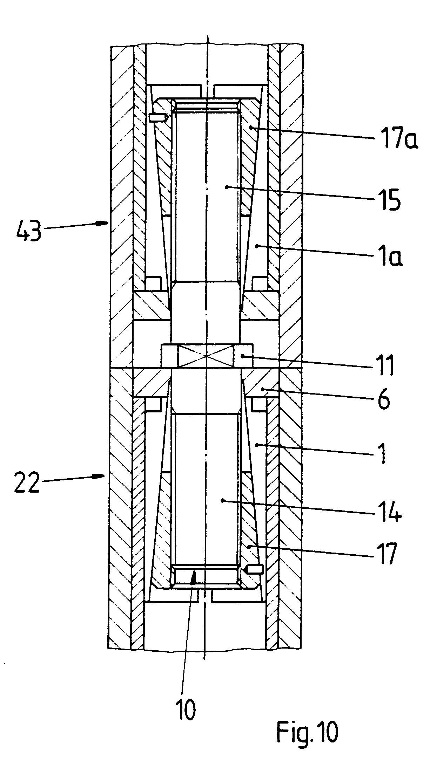

Nach Fig. 9 kann das mit der Verbindungseinrichtung versehene Bauteil 22 auch mit einem anderen rohrförmigen Bauteil 38 verbunden werden, sofern dessen Anschlußende eine das Element 11 und den Ring 6 als Zentrierstück aufnehmende Ausnehmung 39 und einen entsprechenden Innengewindeabschnitt 40 zur Aufnahme des Gewindeteils 15 aufweist. Dieser ist z.B. in einem Füllstück 41 ausgebildet, das in bekannter Weise mittels Eindrückungen 42 im Bauteil 38 fixiert ist. Alternativ wäre es auch denkbar, zunächst ein weiteres spreizbares Teil 1a (Fig. 10) und ein weiteres Spreizteil 17a mit Hilfe des Bolzens 10 in einem Bauteil 43 zu fixieren, dann den Bolzen 10 wieder herauszudrehen, ohne das Spreizteil 17a aus dem spreizbaren Teil 1a herauszuschlagen, danach die Verbindungseinrichtung in der beschriebenen Weise im Bauteil 22 zu befestigen und schließlich das Gewindeteil 15 in das Spreizteil 17a einzudrehen. Eine derartige Anordnung ist allerdings in statischer Hinsicht nicht immer ausreichend stabil, da die Gefahr besteht, daß das Spreizteil 17a beim Entstehen einer kleinen Fuge zwischen den Bauteilen 42 und 22 und bei Ausübung eines Schlags auf eines derselben im spreizbaren Teil 1a etwas axial verschoben und dadurch die Verbindung gelöst wird.

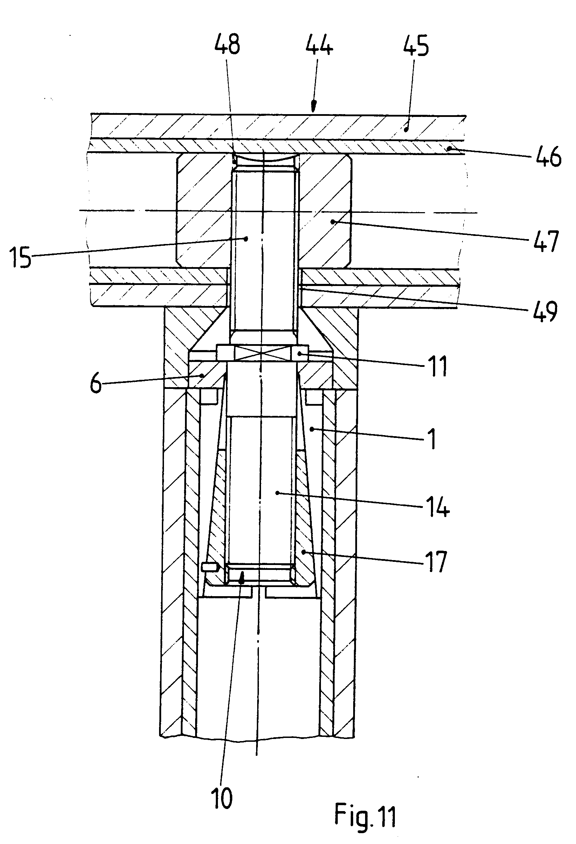

Fig. 11 zeigt die Verbindung des Bauteils 22 mit einem Bauteil 44 unter Bildung eines T-förmigen Anschlusses. Das Bauteil 44 besteht aus einer hohlzylindrischen Kunststoffummantelung 45 und einer in diese eingebrachten hohlzylindrischen Metalleinlage 46, in die ein Füllstück 47 mit einem Innengewindeabschnitt 48 eingesetzt und z.B. mittels eines Klebers befestigt ist. Der Innengewindeabschnitt 48 weist eine senkrecht zur Längsachse des Bauteils 44 verlaufende Achse auf und ist auf ein in der Metalleinlage 46 und in der Kunststoffummantelung 45 ausgebildetes Montageloch 49 ausgerichtet, durch das hindurch das Gewindeteil 15 des Gewindebolzens 10 in den Innengewindeabschnitt 48 eingedreht wird.

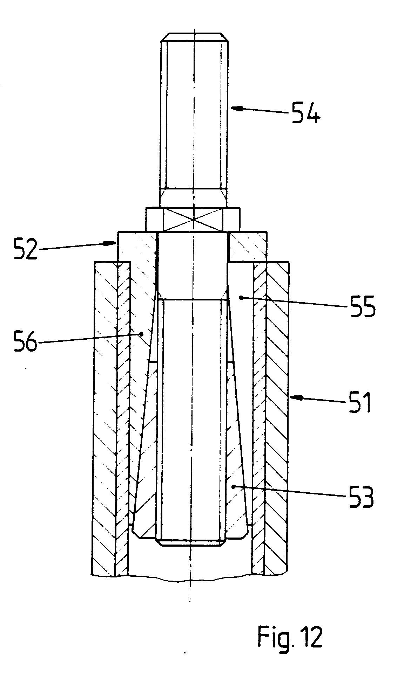

Fig. 12 zeigt eine in einem Bauteil 51 fixierte Verbindungseinrichtung, die ein spreizbares Teil 52, ein Spreizteil 53 und einen Bolzen 54 aufweist. Das spreizbare Teil 52 ist analog zum spreizbaren Teil 1 ausgebildet, aber aus Kunststoff hergestellt. In diesem Fall kommt eine großflächige Berührung zwischen den Teilen 52 und 53 dadurch zustande, daß durch geeignete Wahl des Kunststoffmaterials und der Abmessungen des spreizbaren Teils 52 dessen Sektoren 56 eine ausreichende Eigenelastizität gegeben wird. Daher können sowohl weniger Schlitze 55 (z.B. 3) vorgesehen sein als auch zusätzliche verformbare Teile entsprechend den Teilen 29 (Fig. 2) fehlen. Das Spreizteil 53 besteht ebenfalls aus Kunststoff, der Bolzen 54 dagegen aus Stahl.

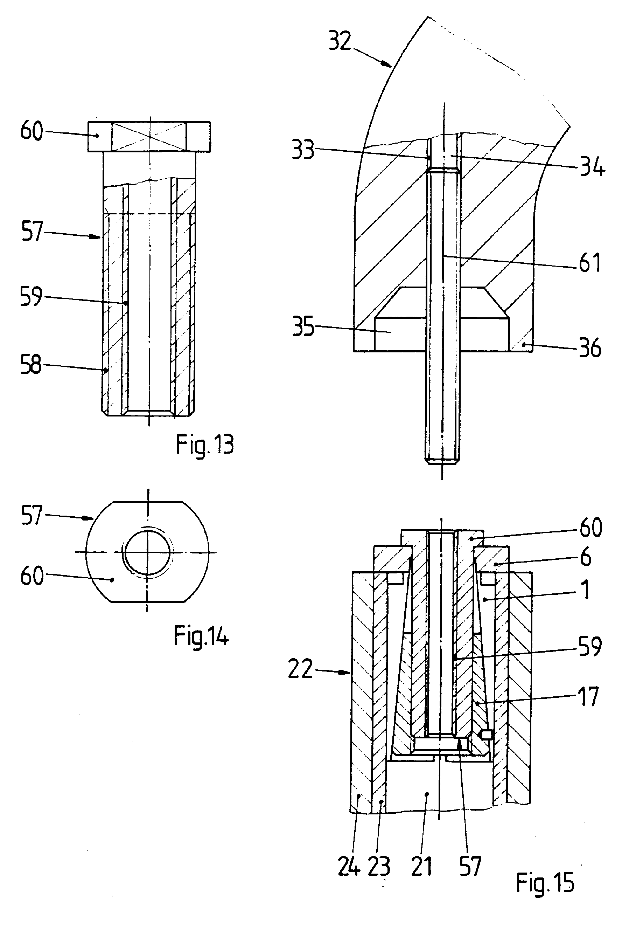

Bei der in Fig. 13 bis 15 dargestellten Ausführungsform der Verbindungseinrichtung, bei der gleiche Teile mit denselben Bezugszeichen versehen sind, ist nur ein anderer Bolzen 57 vorgesehen. Dieser besteht im wesentlichen aus einer hohlzylindrischen Hülse, deren Außenmantel als Außengewindeabschnitt 58 ausgebildet ist und deren mit einem Innengewindeabschnitt versehener Innenmantel als Gewindeteil 59 dient. Am Vorderende des Bolzens 57 ist ein als ringförmiger Bund ausgebildetes Element 60 mit einem zum Ansetzen eines Werkzeugs, z.B. eines Schraubenschlüssels, geeigneten Querschnitt vorgesehen. Die Befestigung der Verbindungseinrichtung erfolgt genauso wie bei Anwendung des Bolzens 10. Zur Verschraubung z.B. mit dem Bauteil 32 nach Fig. 8 ist dagegen entweder ein zusätzlicher Gewindestift 61, der wahlweise zuerst im Gewindeteil 59 des Bolzens 57 oder im Innengewindeabschnitt 33 des Bauteils 32 befestigt wird, oder ein im Bauteil 32 fest verankerter, vorstehender Bolzen mit Außengewinde erforderlich. Dabei ergibt sich der Vorteil, daß zur Befestigung der Verbindungseinrichtung im zugehörigen Anschlußende einerseits und zum Verschrauben der beiden Bauteile miteinander andererseits unterschiedliche Teile verwendet und entsprechend ihrer Funktion dimensioniert werden können.

Mit Hilfe der Bolzen 10 und 57 lassen sich alle vorkommenden Verschraubungsarten realisieren, d.h. die Bauteile 22 und 32 können wahlweise mit einem über ihr Vorderende vorstehenden Gewindeteil 15,61 mit Außengewinde oder mit einem im Vorderende versenkt angeordneten Gewindeteil 59,33 mit Innengewinde versehen werden. Dabei wäre es sogar möglich, die Gewindeteile 15 des Bolzens 10 bzw. Gewindestifte 61 so lang zu machen, daß sie ein zwischen den Bauteilen 22 und 32 befindliches, zusätzlich vorhandenes rohrförmiges Bauteil durchsetzen, das selbst keine Verbindungseinrichtung aufweist, oder eine ein weiteres Bauteil durchsetzende Gewindestange zu verwenden, die in das Gewindeteil 59 oder entsprechende Gewindeteile eingeschraubt wird. Außerdem kann in allen Fällen das Bauteil 22 auch als bogenförmiges Knotenelement ausgebildet sein, weil es für die Montage der erfindungsgemäßen Verbindungseinrichtung nur darauf ankommt, daß das Bauteil ein Anschlußende mit einer entsprechend Fig. 7 ausgebildeten Ausnehmung aufweist.

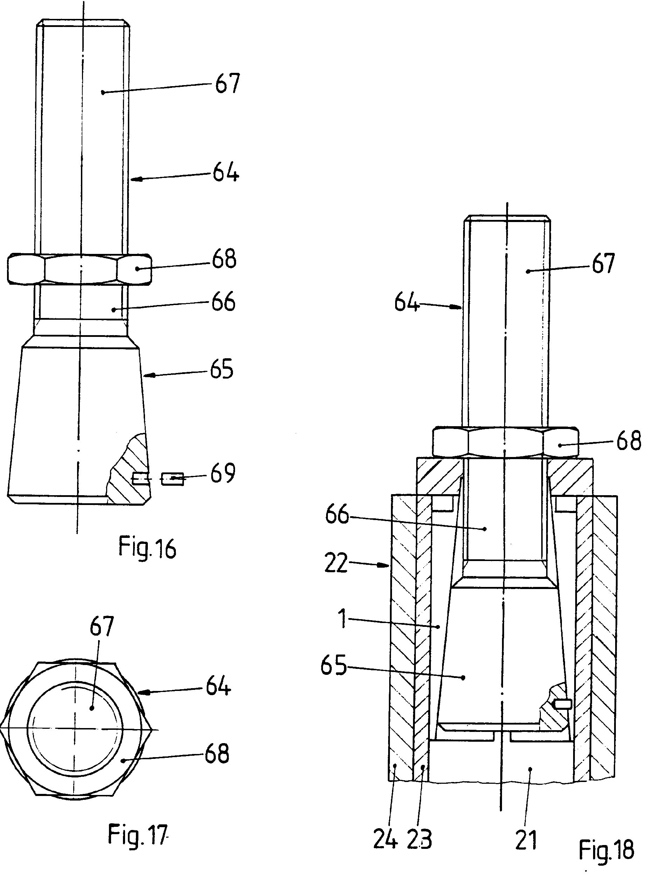

Die Ausführungsform nach Fig. 16 bis 18 unterscheidet sich von den bisherigen Ausführungsformen dadurch, daß ein Bolzen 64 und ein Spreizteil 65 fest miteinander verbindbar oder fest miteinander verbunden und dazu beispielsweise aus einem Stück hergestellt sind. Der Bolzen 64 weist ein wie beim Bolzen 10 durchgehendes Außengewinde auf, dessen hinterer Abschnitt 66 zur Verspannung dient und dessen Vorderabschnitt das zur Verbindung der beiden Bauteile dienende Gewindeteil 67 bildet, wobei die Gewindeabschnitte 66,67 auch getrennt voneinander sein können. Auf den Außengewindeabschnitt 66 ist ein Element 68 aufgeschraubt, das im Gegensatz zum Element 11 aus einer Mutter besteht, die ein Innengewinde und einen z.B. sechseckigen Außenquerschnitt aufweist. Außerdem kann das Spreizteil 65, das im übrigen dem Spreizteil 17 entspricht und im wesentlichen hülsenartig oder zylindrisch ausgebildet sein kann, mit einem seitlichen Stift 69 versehen werden, um es undrehbar und ggfs. unverlierbar im spreizbaren Teil 1 anzuordnen.

Im Gegensatz zu Fig. 7 erfolgt die Befestigung der Verbindungseinrichtung nach Fig. 16 und 17 entsprechend Fig. 18 dadurch, daß sie zunächst in die Ausnehmung 21 eingeführt wird, bis der Ring 6 am Anschlußende aufliegt, und dann das Element 68 auf dem Außengewindeabschnitt 66 festgezogen wird. In diesem Fall ermöglicht das Element 68 eine Verspannung des spreizbaren Teils 1 vor Herstellung der Schraubverbindung zwischen den Bauteilen, da es sich beim Drehen in Festziehrichtung zunächst gegen den Ring 6 od. dgl. legt, dadurch als Widerlager mit fester relativer axialer Lage zum Teil 1 wirkt und beim Weiterdrehen das Spreizteil 65 in das spreizbare Teil 1 hineinzieht. Daran anschließend kann das Bauteil 22 entsprechend Fig. 7 bis 11 mit anderen Bauteilen verschraubt werden.

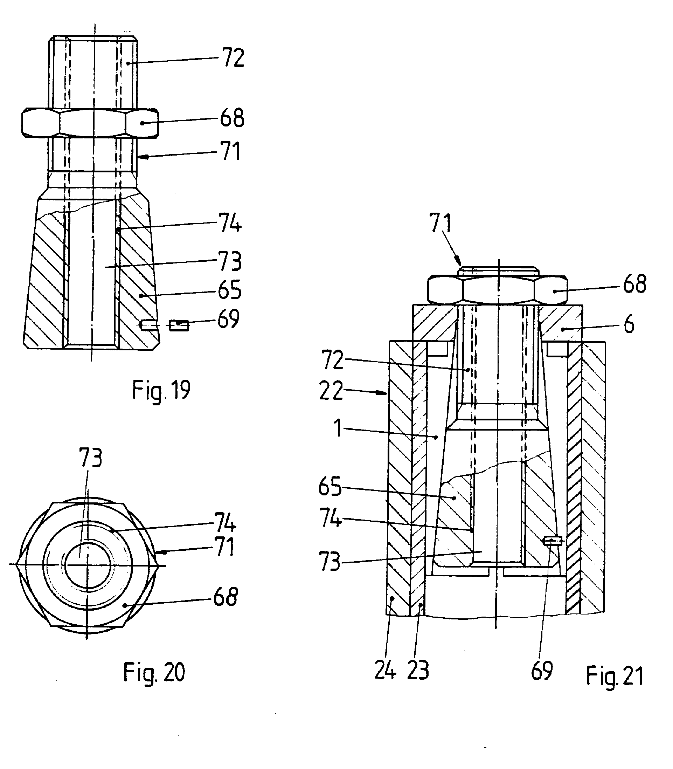

Fig. 19 bis 21 zeigen ein Ausführungsbeispiel, bei dem im Vergleich zu Fig. 16 bis 18 ein anderer Bolzen 71 vorgesehen ist, der lediglich einen ersten Außengewindeabschnitt 72 aufweist, auf den das Element 68 aufgeschraubt wird. Anstelle des zweiten Außengewindeabschnitts 67 ist der Gewindebolzen 71 analog zu Fig. 13 und 14 mit einer Mittelbohrung 73 versehen, deren Wandung mit einem Innengewinde versehen ist, welches ein Gewindeteil 74 bildet, mit dem die anhand Fig. 15 erläuterten Verschraubungsarten möglich sind. Außerdem ist auch bei dieser Ausführungsform die Verschraubungsfunktion von der Verspannungsfunktion getrennt.

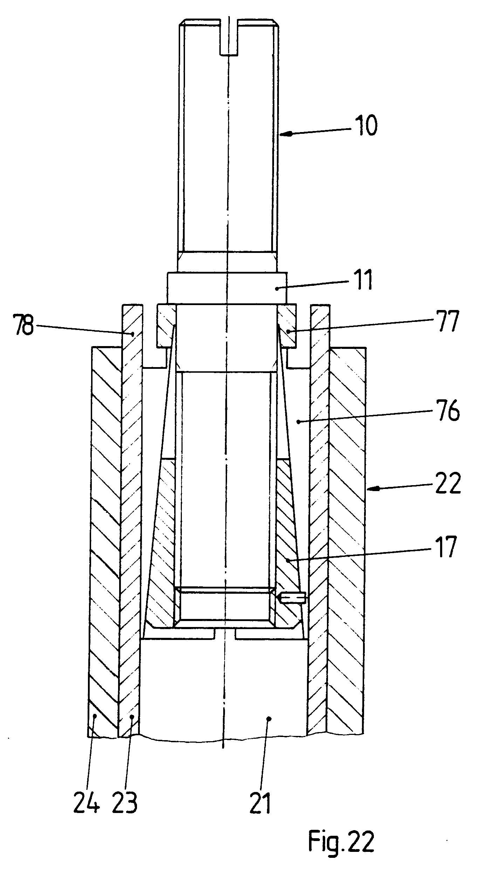

Fig. 22 zeigt eine Ausführungsform, die der nach Fig. 7 ähnlich ist und sich von dieser durch ein anderes spreizbares Teil 76 unterscheidet. Das Teil 76 weist am Vorderende einen Ring 77 auf, der keinen so großen Querschnitt hat, daß er sich auf das Vorderende des Bauteils 22 auflegen und/oder als Zentrierstück für ein anderes Bauteil wirken könnte. Daher erfolgt bei diesem Beispiel die Zentrierung in bekannter Weise mittels der Metalleinlage 23, die am Vorderende etwas über die Kunststoffummantelung 24 vorsteht und ein Zentrierstück 78 bildet. Im übrigen ist die Anordnung analog zu Fig. 7. Dabei ist der Ring 77 zweckmäßig so ausgebildet, daß er von außen mit einem gekröpften Schraubenschlüssel, einem Steckschlüssel od. dgl. selbst dann noch erfaßt werden kann, wenn er entsprechend Fig. 22 ganz oder teilweise im Anschlußende des Bauteils 22 versenkt angeordnet ist.

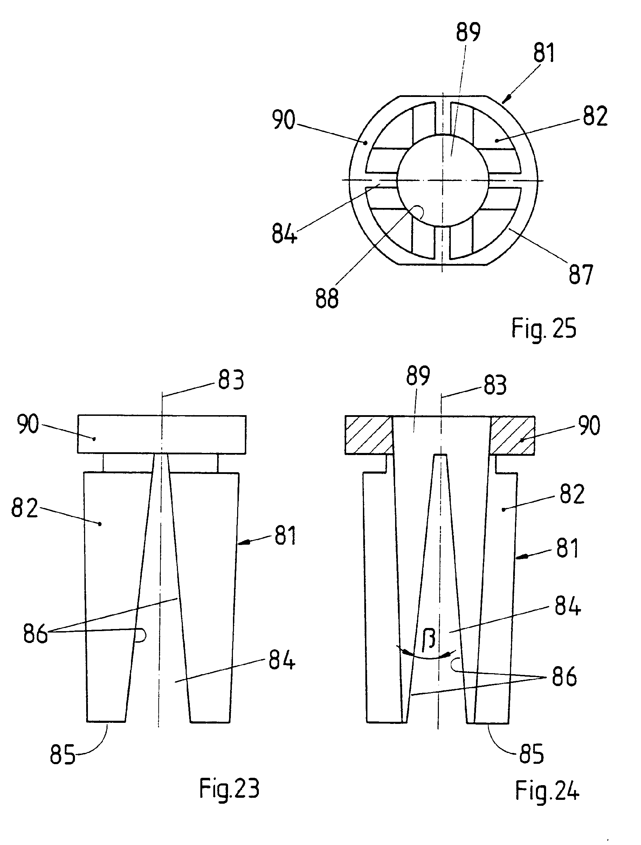

Bei der Ausführungsform nach Fig. 23 bis 28 ist ein spreizbares Teil 81 vorgesehen, das hülsenartig ausgebildet ist und eine Mehrzahl von (hier vier) vorzugsweise identischen Segmenten 82 enthält. Im Gegensatz zu Fig. 1 bis 3 sind diese Segmente 82 nicht durch exakt parallel zu einer Längsachse 83 verlaufende Schlitze, sondern durch Schlitze 84 getrennt, die sich zwar in Längsrichtung des spreizbaren Teils 81 erstrecken, aber keilförmig ausgebildet sind. Wie Fig. 23 und 24 zeigen, haben die Schlitze 84 im Längsschnitt etwa die Form eines gleichschenkeligen Dreiecks, dessen Grundseite am Hinterende 85 des Teils 81 liegt und dessen beiden Schenkel durch die entsprechend schräg zur Längsachse 83 verlaufenden Seitenflächen 86 der Segmente 82 gebildet sind. Ein Keilwinkel β (Fig. 24) beträgt vorzugsweise nur wenige Grad, z.B. 5°.

Die Segmente 82 besitzen im übrigen äußere Mantelflächen 87, die auf einer Zylinderfläche liegen, sowie Innenflächen 88, die abweichend von Fig. 1 bis 3 ebenfalls im wesentlichen auf einer Zylinderfläche angeordnet sind und sich wie die Außenflächen 87 jeweils über etwas weniger als ein Viertel dieser Zylinderfläche erstrecken. Die Vorderenden der Segmente 82 sind analog zu Fig. 1 bis 3 mit einem geschlossenen, ein Mittelloch 89 aufweisenden Ring 90 verbunden.

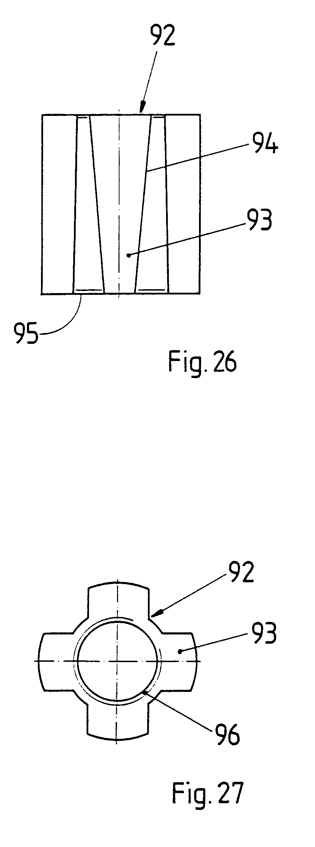

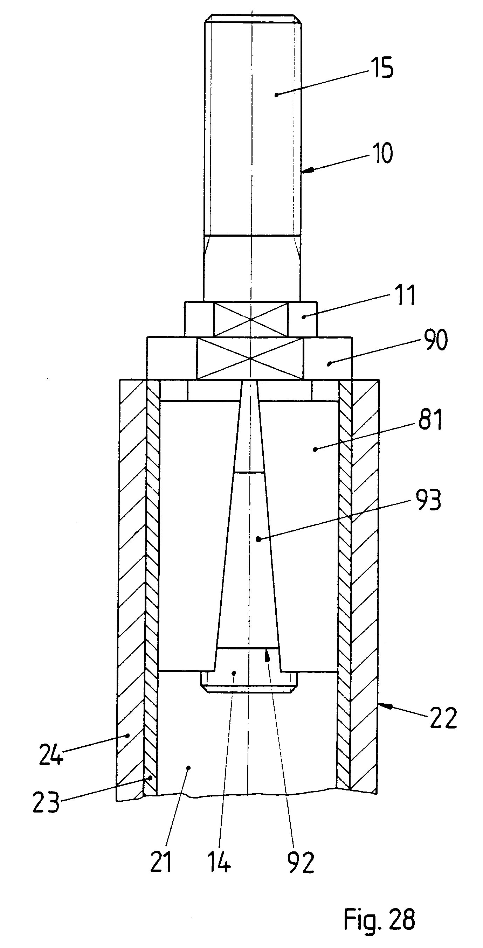

Zur Spreizung des spreizbaren Teils 81 weist die Verbindungseinrichtung nach Fig. 26 und 27 ein im wesentlichen hohlzylindrisches Spreizteil 92 auf, das so geformt ist, daß es zumindest teilweise in das spreizbare Teil 81 einführbar ist. Zwecks Erzeugung einer ausreichend großen Spreizwirkung ist das Spreizteil 92 dort, wo das spreizbare Teil 81 die Schlitze 84 aufweist, mit radial vorstehenden, keilförmigen Ansätzen 93 versehen, deren Seitenflächen als Spreizflächen 94 wirken und in ihrer Form an die Seitenflächen 86 des spreizbaren Teils 81 angepaßt sind. Diese Ansätze 83 werden wie die Schlitze 84 vom Hinterende 95 des Spreizteils 92 in Richtung von dessen Vorderende allmählich schmaler (Fig. 26), wobei die Abmessungen der Spreizflächen 94 zweckmäßig denen der Seitenflächen 86 der Schlitze 84 entsprechen, so daß sich eine großflächige Wechselwirkung beim Spreizvorgang ergibt. Dabei ist die Breite der Ansätze 93 am Vorderende des Spreizteils 22 vorzugsweise um so viel kleiner als die Schlitzbreite am Hinterende des spreizbaren Teils 81, daß die Spreizteile 92 entsprechend Fig. 28 von hinten her in den spreizbaren Teilen 81 und entsprechend die Ansätze 93 von hinten her in den Schlitzen 84 so weit vorgeschoben werden können, bis die Ansätze 83 wenigstens etwa zur Hälfte in den Schlitzen 84 angeordnet sind und dadurch eine hohe Radialkraft auf das spreizbare Teil 81 ausüben können. Beim Ausführungsbeispiel ist das Spreizteil 92 außerdem mit einem in Achsrichtung durchgehenden Innengewindeabschnitt 96 versehen, in den der erste Außengewindeabschnitt 14 des Bolzens 10 (Fig. 4 und 5) eingeschraubt werden kann.

Fig. 28 zeigt die Verbindungseinrichtung im montierten Zustand in der zylindrischen Ausnehmung 21 des Bauteils 22, das entsprechend Fig. 7 ausgebildet ist. Die Montage erfolgt auch bei diesem Ausführungsbeispiel dadurch, daß zunächst das Spreizteil 92 vom Hinterende her in das spreizbare Teil 81 geschoben, dann der Außengewindeabschnitt 14 von der Vorderseite her durch das Mittelloch 89 des Rings 90 hindurch lose in das Spreizteil 92 eingeschraubt und danach das spreizbare Teil 81 in die Ausnehmung 21 eingeführt wird. Abschließend wird der Bolzen 10 mittels eines am Element 11 angesetzten Werkzeugs festgezogen, wodurch das Spreizteil 92 immer tiefer in das spreizbare Teil 81 hineingezogen wird. Die Spreizflächen 94 legen sich dabei an die ihnen zugewandten Seitenflächen 86 der Segmente 82 an und drücken diese dadurch immer mehr in Umfangsrichtung auseinander und folglich radial nach außen gegen den zylindrischen Innenmantel der Metalleinlage 23. Bei diesem Ausführungsbeispiel kann das spreizbare Teil 81 mit um so mehr Flächenpressung in der Ausnehmung 21 verspannt werden, je größer die Zahl der Schlitze 84 und Ansätze 93 bzw. der zusammenwirkenden Flächen 86,94 ist.

Die Verbindungseinrichtung nach Fig. 23 bis 28 kann in allen Varianten hergestellt und benutzt werden, die oben und nachfolgend anhand Fig. 7A bis 22 für die Verbindungseinrichtung nach Fig. 1 bis 7 beschrieben und beansprucht sind. Die Anwendung der Stifte 26 (Fig. 6) ist allerdings überflüssig, weil die in die Schlitze 84 eingreifenden Ansätze 93 gleichzeitig die gewünschte Drehsicherung bilden.

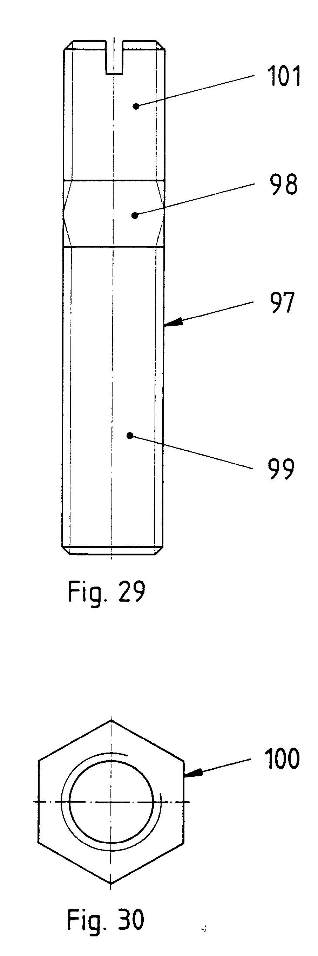

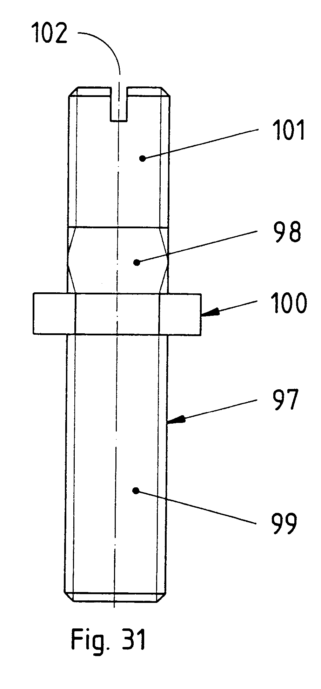

Bei der Ausführungsform nach Fig. 1 bis 15 und 22 bis 28 braucht das Element 11 nicht, wie in Fig. 4 dargestellt ist, mit dem Bolzen 10 aus einem Stück bestehen. Es ist vielmehr auch möglich, das Element 11 nachträglich auf den Bolzen 10 aufzuziehen und an diesem zu befestigen. Eine solche Ausführungsform ist in Fig. 29 bis 31 dargestellt, wonach ein Bolzen 97 vorgesehen ist, der in einem mittleren Teil einen als Anschlag wirkenden, z.B. gewindelosen Abschnitt 98, eine Rändelung od. dgl. aufweist. Anstelle des Elements 11 ist bei diesem Beispiel eine normale, auf einen unteren Außengewindeabschnitt 99 des Bolzens 97 aufgeschraubte Mutter 100 vorgesehen. Diese wird so weit auf den Gewindeabschnitt 99 aufgeschraubt, bis sie sich fest gegen den gewindelosen Abschnitt 98 od. dgl. legt und dann bei der Montage des Bolzens 97 dieselbe Wirkung wie das Element 11 nach Fig. 4 hat. An seinem von der Mutter 100 abgewandten Ende weist der Bolzen 97 vorzugsweise außer einem Gewindeabschnitt 101 noch ein Mittel 102 zum Ansetzen eines Werkzeugs, z.B. einer Schraubendreherklinge, auf. Möglich wäre natürlich auch die Anwendung eines normalen Gewindebolzens, bei dem das Gewinde im Bereich des Abschnitts 98 ausreichend verformt wird.

Die Erfindung ist nicht auf die beschriebenen Ausführungsbeispiele beschränkt, die sich auf vielfache Weise abwandeln lassen. Beispielsweise wäre es möglich, die endgültige Verbindung von zwei Bauteilen mit Hilfe eines Bolzens vorzunehmen, der das zur Verspannung dienende Element (z.B. 11) nicht aufweist. Wie schon anhand Fig. 10 kurz erläutert wurde, kann das Spreizteil in der zugehörigen Ausnehmung irgendeines Bauteils zunächst mit Hilfe eines das Element 11 aufweisenden Bolzens so fest angezogen werden, daß das spreizbare Teil fest in der Ausnehmung verankert ist. Wird jetzt der Bolzen wieder gelöst, bleibt das spreizbare Teil so lange fest verankert, wie kein Stoß auf das Spreizteil ausgeübt wird. Es wäre daher möglich, den Bolzen völlig herauszudrehen, dann einen Bolzen einzudrehen, der das Element 11 nicht aufweist, diese Vorgehensweise bei Bedarf bei einem anderen Bauteil zu wiederholen und dann die beiden Bauteile miteinander zu verbinden. Sind die beiden Bauteile erst einmal fest miteinander verbunden und ggf. durch weitere Bauteile auch miteinander verspannt, dann ist ein beabsichtigtes Lösen der beiden Bauteile trotz des fehlenden Elements 11 nicht mehr möglich. Daher können einfache Bauelemente wie Handtuchstangen, Pendeltürgriffe oder auch Teile von größeren Konstruktionen wie z.B. Geländern oder Brüstungen dadurch im Werk vormontiert werden, daß zunächst die spreizbaren Teile mit Hilfe der die Elemente 11 aufweisenden Bolzen 10 fest in den Bauteilen verankert und dann die jeweiligen Bauteile mit Hilfe von die Elemente 11 nicht aufweisenden Bolzen fest miteinander verbunden werden. Entsprechend könnte an der Baustelle vorgegangen werden.

Weiter kann das spreizbare Teil mehr oder weniger als die dargestellten axialen Schlitze 4 bzw. 84 aufweisen. Insbesondere ist es auch möglich, das spreizbare Teil durch zwei oder mehr Segmente 2 bzw. 82 zu bilden, die voneinander getrennt, d.h. nicht durch den Ring 6 bzw. 90 od. dgl. verbunden sind, in welchem Fall auch bei Segmenten aus Stahl keine besonderen verformbaren Teile vorgesehen werden müßten. Hierbei bietet sich insbesondere die Anwendung von zwei aus Halbschalen bestehenden Segmenten an. Weiter wäre es möglich, die Metalleinlage 23 kürzer als die Kunststoffummantelung 24 auszubilden und analog zu Fig. 22 anstelle des Rings 77 eine die Stoßfuge überbrückende separate Zentrierhülse od. dgl. vorzusehen. Bei den Ausführungsbeispielen nach Fig. 13 bis 15 und 19 bis 21 wäre es weiter möglich, die Gewindeteile 59 bzw. 74 ganz wegzulassen und im Vorderende des Bolzens lediglich ein Sackloch od. dgl. für einen am anderen Bauteil vorgesehenen Stift auszubilden, wobei die Verbindung der beiden Bauteile durch Preßsitz, Kleben, Verstiften od. dgl. erfolgt. In entsprechender Weise können bei den anderen Ausführungsformen die Gewindeteile 15 bzw. 64 durch vorstehende Stifte ersetzt werden, die in den Ausnehmungen der anderen Bauteile durch Preßsitz, Kleben, Verstiften od. dgl. gefestigt werden. Weiterhin wäre es möglich, mit der beschriebenen Verbindungseinrichtung auch zwei Knotenelemente direkt miteinander zu verbinden, indem diese je nach Fall mit entsprechenden Aufnahmeöffnungen für die beschriebenen spreizbaren Teile und/oder mit Innengewindeabschnitten 33 versehen werden. Dabei ist auch denkbar, die Rohre und/oder Knotenelemente an ihren Enden mit unterschiedlichen Aufnahmeöffnungen zu versehen. Möglich wäre außerdem, die Erweiterungen 35 (Fig. 8) so groß auszubilden, daß wahlweise ein spreizbares Teil in die Erweiterung oder ein Gewindeteil in den Innengewindeabschnitt 33 eingeführt werden kann. Schließlich ist es möglich, die Formen der Innenquerschnitte der Ausnehmungen und der Außenquerschnitte der spreizbaren Teile zumindest teilweise unterschiedlich zu wählen, d.h. z.B. mit zylindrischen Ausnehmungen zusammenwirkende, spreizbare Teile vorzusehen, deren Außenquerschnitte sechs- oder achteckig ausgebildet sind. Auch insoweit brauchen sich die entsprechenden Durchmesser bzw. Querschnitte nur im wesentlichen zu entsprechen. Das Maß an Übereinstimmung wird dabei hauptsächlich durch die zu übertragenden Kräfte bzw. die zu erzielende Stabilität der Verbindung und die im Einzelfall verwendeten Materialien bestimmt sein.

## Patentansprüche

1. Verbindungseinrichtung für ein insbesondere rohrförmiges Bauteil, das wenigstens ein eine Ausnehmung aufweisendes Anschlußende besitzt, das mittels einer unsichtbaren, vorzugsweise durch Schrauben herstellbaren Verbindung unter Bildung einer Stoßfuge mit einem Anschlußende eines anderen Bauteils verbindbar ist, ggfs. unter Zwischenschaltung eines dritten, rohrförmigen Bauteils und Bildung einer weiteren Stoßfuge, enthaltend: ein zumindest mit seinem Hinterende in die Ausnehmung einsetzbares, spreizbares Teil (1,52,76,81), ein Spreizteil (17,53,65,92) und einen Bolzen (10), der mit einem zur Herstellung der Verbindung bestimmten Teil und einem Mittel zum Ansetzen eines Werkzeugs versehen ist, dadurch gekennzeichnet, daß das spreizbare Teil (1,52,76,81) hülsenförmig ausgebildet ist und eine mit einer Spreizfläche (18,94) des Spreizteils (17,53,65,92) großflächig zusammenwirkende, an diese angepaßte Fläche (8,86) aufweist.

2. Verbindungseinrichtung nach Anspruch 1, dadurch gekennzeichnet, daß das spreizbare Teil (1,52,76,81) mit wenigstens einem in seiner Längsrichtung verlaufenden Schlitz versehen und dadurch spreizbar ist und einen im wesentlichen dem Innendurchmesser der Ausnehmung entsprechenden Durchmesser aufweist.

3. Verbindungseinrichtung nach Anspruch 2, dadurch gekennzeichnet, daß das Spreizteil (17,53,65,92) zumindest teilweise in das spreizbare Teil (1,52,76,81) einführbar ist.

4. Verbindungseinrichtung nach Anspruch 3, dadurch gekennzeichnet, daß das Spreizteil (17,53,65,92) mit wenigstens einer zum radialen Aufweiten des spreizbaren Teils bestimmten Spreizfläche versehen ist.

5. Verbindungseinrichtung nach Anspruch 3 oder 4, dadurch gekennzeichnet, daß der Bolzen (10,54,57,64,71,97) zur axialen Verschiebung des Spreizteils im spreizbaren Teil und dadurch zur radialen Verspannung des spreizbaren Teils in der Ausnehmung dient.

6. Verbindungseinrichtung nach Anspruch 5, dadurch gekennzeichnet, daß dem Bolzen (10,54,57,64,71,97) ein die Verspannung vor Herstellung der Verbindung ermöglichendes Element (11,60,68,100) zugeordnet ist.

7. Verbindungseinrichtung nach einem der Ansprüche 1 bis 6, dadurch gekennzeichnet, daß das zur Herstellung der Verbindung bestimmte Teil ein Gewindeteil (15,59,67,74,101) ist.

8. Verbindungseinrichtung nach einem der Ansprüche 1 bis 7, dadurch gekennzeichnet, daß der Bolzen (64,71) starr mit dem Vorderende des Spreizteils (65) verbunden ist und das Element (68) aus einer auf dem Bolzen (64,71) aufschraubbaren oder aufgeschraubten Mutter besteht.

9. Verbindungseinrichtung nach Anspruch 8, dadurch gekennzeichnet, daß der Bolzen (64,71) und das Spreizteil (65) aus einem Stück gefertigt sind.

10. Verbindungseinrichtung nach einem der Ansprüche 1 bis 7, dadurch gekennzeichnet, daß das Spreizteil (17,53,92) hülsenartig ausgebildet und mit einem Innengewindeabschnitt (19,96) versehen ist, der Bolzen (10,54, 57,97) einen in das Vorderende des Innengewindeabschnitts (19,96) eindrehbaren ersten Außengewindeabschnitt (14,58,99) aufweist und das Element (11,60,100) ein starr am Bolzen (10,54,57,97) angebrachter oder befestigbarer Ansatz ist.

11. Verbindungseinrichtung nach einem der Ansprüche 7 bis 10, dadurch gekennzeichnet, daß das Gewindeteil (59,74) aus einem in einer nach vorn offenen Ausnehmung des Bolzens (57,71) ausgebildeten Innengewindeabschnitt besteht.

12. Verbindungseinrichtung nach einem der Ansprüche 7 bis 10, dadurch gekennzeichnet, daß das Gewindeteil (15,67,101) aus einem zweiten, am Vorderende des Bolzens (10,64,97) ausgebildeten Außengewindeabschnitt besteht.

13. Verbindungseinrichtung nach einem der Ansprüche 1, 2 und 10 bis 12, dadurch gekennzeichnet, daß das Element (11,60) aus einem umlaufenden Bund besteht.

14. Verbindungseinrichtung nach einem der Ansprüche 1, 2 und 10 bis 12, dadurch gekennzeichnet, daß der Bolzen (97) einen als Anschlag wirkenden Abschnitt (98) aufweist und das Element (100) aus einer an diesem Abschnitt anliegenden Mutter besteht.

15. Verbindungseinrichtung nach einem der Ansprüche 1 bis 14, dadurch gekennzeichnet, daß das Element (11,60,68) einen zum Ansetzen eines Werkzeugs geeigneten Querschnitt besitzt.

16. Verbindungseinrichtung nach einem der Ansprüche 1 bis 15, dadurch gekennzeichnet, daß sie ein Mittel aufweist, das eine Drehung des Spreizteils (17,65) im spreizbaren Teil (1) verhindert.

17. Verbindungseinrichtung nach Anspruch 16, dadurch gekennzeichnet, daß das Mittel nach Art einer Nut/Feder-Verbindung ausgebildet ist.

18. Verbindungseinrichtung nach Anspruch 17, dadurch gekennzeichnet, daß das Mittel einen achsparallelen Schlitz (4) oder eine achsparallele Nut im spreizbaren Teil (1) und eine in den Schlitz (4) oder die Nut ragenden Stift (26,69) am Spreizteil (17,65) enthält.

19. Verbindungseinrichtung nach Anspruch 17 oder 18, dadurch gekennzeichnet, daß der Schlitz (4) am Hinterende geschlossen oder zumindest eines der Segmente (2) am Hinterende mit einer Umbiegung versehen ist.

20. Verbindungseinrichtung nach einem der Ansprüche 1 bis 19, dadurch gekennzeichnet, daß das spreizbare Teil aus zwei oder mehr voneinander getrennten Schalen gebildet ist.

21. Verbindungseinrichtung nach einem der Ansprüche 1 bis 20, dadurch gekennzeichnet, daß das spreizbare Teil (1) aus wenigstens zwei Segmenten (2) besteht, die durch wenigstens einen achsparallelen Schlitz (4) getrennt sind und gemeinsam die konische innere Mantelfläche (8) und eine im wesentlichen zyllindrische äußere Mantelfläche (7) bilden, und daß das Spreizteil (17) eine mit der inneren Mantelfläche zusammenwirkende, äußere Spreizfläche (18) aufweist.

22. Verbindungseinrichtung nach einem der Ansprüche 1 bis 20, dadurch gekennzeichnet, daß das spreizbare Teil (81) aus wenigstens zwei Segmenten (82) besteht, die durch wenigstens einen keilförmig ausgebildeten, von Seitenflächen (86) begrenzten Schlitz (84) getrennt sind und eine im wesentlichen zylindrische äußere Mantelfläche (87) bilden, und daß das Spreizteil (92) wenigstens einen in den Schlitz (84) einführbaren Ansatz (93) mit seitlichen, mit den Seitenflächen (86) zusammenwirkenden Spreizflächen (94) aufweist.

23. Verbindungseinrichtung nach Anspruch 21 oder 22, dadurch gekennzeichnet, daß die Segemente (2,82) mit einem am Vorderende des spreizbaren Teils (1,76,81) ausgebildeten Ring (6,77,90) zusammengehalten sind.

24. Verbindungseinrichtung nach Anspruch 23, dadurch gekennzeichnet, daß der Ring (6,90) einen zur Abstützung am Vorderende des Anschlußendes des Bauteils (22) geeigneten Querschnitt besitzt.

25. Verbindungseinrichtung nach Anspruch 23 oder 24, dadurch gekennzeichnet, daß der Ring (6,77,90) einen zum Ansetzen eines Werkzeugs geeigneten Querschnitt aufweist.

26. Verbindungseinrichtung nach einem der Ansprüche 23 bis 25, dadurch gekennzeichnet, daß der Ring (6,90) als Zentrierstück für das andere Bauteil ausgebildet ist.

27. Verbindungseinrichtung nach einem der Ansprüche 1 bis 26, dadurch gekennzeichnet, daß das spreizbare Teil (1,76,81) aus Stahl besteht.

28. Verbindungseinrichtung nach einem der Ansprüche 1 bis 27, dadurch gekennzeichnet, daß die Segmente (2) an ihren Vorderenden mittels verformbarer Teile (29) mit dem Ring (6) verbunden sind.

29. Verbindungseinrichtung nach Anspruch 28, dadurch gekennzeichnet, daß die verformbaren Teile (29) aus dünnen Verbindungsstegen oder Wandteilen bestehen.

## Claims

1. Connecting device, particularly for a tubular member, having at least one connecting end including a recess and being connectable by means of an invisible connection, preferably produced by screwing, forming a butt joint with one connecting end of another component, if necessary with an interposed third tubular component and formation of another butt joint, including: an expandable part (1, 52, 76, 81) insertable at least with its rear end into the recess, a spreader portion (17, 53, 65, 92) and a bolt (10) provided with a portion intended to produce the connection and a means for applying a tool, characterised in that the expandable part (1, 52, 76, 81) is sleeve-shaped and has a surface (8, 86) operating in conjunction with an expanding surface (18, 94) of the spreader portion (17, 53, 65, 92) over a large surface area, and adapted to conform thereto.

2. Connecting device according to claim 1, characterised in that the expandable part (1, 52, 76, 81) is provided with at least one slot extending in its longitudinal direction, and is hereby expandable, and has a diameter corresponding substantially to the internal diameter of the recess.

3. Connecting device according to claim 2, characterised in that the spreader portion (17, 53, 65, 92) is at least partly introducible into the expandable part (1, 52, 76, 81).

4. Connecting device according to claim 3, characterised in that the spreader portion (17, 53, 65, 92) is provided with at least one expanding surface for radial expansion of the expandable portion.

5. Connecting device according to claim 3 or 4, characterised in that the bolt (10, 54, 57, 64, 71, 97) serves to provide axial displacement of the spreader portion in the expandable part, and thus to provide radial clamping of the expandable part in the recess.

6. Connecting device according to claim 5, characterised in that a member (11, 60, 68, 100) enabling clamping before production of the connection is associated with the bolt (10, 54, 57, 64, 71, 97).

7. Connecting device according to one of claims 1 to 6, characterised in that the part destined to produce the connection is a threaded part (15, 59, 67, 74, 101).

8. Connecting device according to one of claims 1 to 7, characterised in that the bolt (64, 71) is rigidly connected to the forward end of the spreader portion (65), and the member (68) comprises a nut capable of being screwed on to, or screwed on to, the bolt (64, 71).

9. Connecting device according to claim 8, characterised in that the bolt (64, 71) and the spreader portion (65) are made in one piece.

10. Connecting device according to one of claims 1 to 7, characterised in that the spreader portion (17, 53, 92) is sleeve-shaped and is provided with an internal tapped portion (19, 96), the bolt (10, 54, 57, 97) has a first externally-threaded portion (14, 58, 99) which may be screwed into the forward end of the internal tapped portion (19, 96), and the member (11, 60, 100) is an extension member rigidly attached to or attachable to the bolt (10, 54, 57, 97).

11. Connecting device according to one of claims 7 to 10, characterised in that the threaded portion (59, 74) comprises an internally tapped portion formed in a recess, which opens in a forward direction, in the bolt (57, 71).

12. Connecting device according to one of claims 7 to 10, characterised in that the threaded portion (15, 67, 101) comprises a second externally threaded portion formed on the forward end of the bolt (10, 64, 97).

13. Connecting device according to one of claims 1, 2 and 10 to 12, characterised in that the member (11, 60) comprises a surrounding collar.

14. Connecting device according to one of claims 1, 2 and 10 to 12, characterised in that the bolt (97) has a portion (98) acting as a stop means, and the member (100) comprises a nut abutting against said portion.

15. Connecting device according to one of claims 1 to 14, characterised in that the member (11, 60, 68) has a cross-section appropriate for application of a tool.

16. Connecting device according to one of claims 1 to 15, characterised in that it includes means for preventing rotation of the spreader portion (16, 75) in the expandable part (1).

17. Connecting device according to claim 16, characterised in that the means is in the form of a groove/spring connection.

18. Connecting device according to claim 17, characterised in that the means includes a coaxial slot (4) or a coaxial groove in the expandable part (1) and a pin (26, 29) on the spreader portion (17, 65) which projects into the slot (4) or groove.

19. Connecting device according to claim 17 or 18, characterised in that the slot (4) is closed at the rear end, or at least one of the segments (2) on the rear end is provided with a bent-over portion.

20. Connecting device according to one of claims 1 to 19, characterised in that the expandable part is formed by two or more separate shells.

21. Connecting device according to one of claims 1 to 20, characterised in that the expandable part (1) comprises at least two segments (2), separated by at least one coaxial slot (4) and in common forming the conical internal surface area (8) and a substantially cylindrical outer surface area (7), and in that the spreader portion (17) has an external expanding surface (18) operating in conjunction with the internal surface area.

22. Connecting device according to one of claims 1 to 20, characterised in that the expandable part (81) comprises at least two segments (82) separated by at least one wedge-shaped slot (84) defined by lateral surfaces (86), and forming a substantially cylindrical external surface area (87), and in that the spreader portion (92) has at least one extension member (93), which is introducible into the slot (84) and which operates in conjunction with the lateral surfaces (86).

23. Connecting device according to claim 21 or 22, characterised in that the segments (2, 82) are held together by a ring (6, 77, 90) formed at the forward end of the expandable part (1, 76, 81).

24. Connecting device according to claim 23, characterised in that the ring (6, 90) has a cross-section appropriate for providing support on the forward end of the connecting end of the component (22).

25. Connecting device according to claim 23 or 24, characterised in that the ring (6, 77, 90) has a cross-section appropriate for application of a tool.

26. Connecting device according to one of claims 23 to 25, characterised in that the ring (6, 90) is formed as a centring piece for the other component.

27. Connecting device according to one of claims 1 to 26, characterised in that the expandable part (1, 76, 81) is made of steel.

28. Connecting device according to one of claims 1 to 27, characterised in that the segments (2) are connected by their forward ends to the ring (6) by means of deformable parts (29).

29. Connecting device according to claim 28, characterised in that the deformable parts (29) comprise thin connecting webs or wall portions.

## Revendications

1. Dispositif d'assemblage pour un composant, tubulaire notamment, présentant une extrémité de jonction, au moins, munie d'un évidement et qui peut être assemblée avec une extrémité de jonction d'un autre composant au moyen d'un assemblage invisible, créé par des vis de préférence, en formant un joint, en intercalant éventuellement un troisième composant tubulaire et en formant un autre joint, ce dispositif comportant un élément extensible (1, 52, 76, 81), qui peut être logé par son extrémité arrière, du moins, dans l'évidement, un élément d'écartement (17, 53, 65, 92) et un boulon (10), muni d'une partie destinée à produire l'assemblage et d'un moyen pour la pose d'un outil, caractérisé en ce que l'élément extensible (1, 52, 76, 81) est réalisé en forme de douille et présente une surface (8, 86), concourant sur une grande portée avec une surface d'écartement (18, 94) de l'élément d'écartement (17, 53, 65, 92), à laquelle elle est adaptée.

2. Dispositif d'assemblage suivant la revendication 1, caractérisé en ce que l'élément extensible (1, 52, 76, 81) est muni d'une fente au moins, prévue dans son sens longitudinal et permettant de l'écarter, et présente un diamètre essentiellement correspondant au diamètre intérieur de l'évidement.

3. Dispositif d'assemblage suivant la revendication 2, caractérisé en ce que l'élément d'écartement (17, 53, 65, 92) peut être introduit, en partie du moins, dans l'élément extensible (1, 52, 76, 81).

4. Dispositif d'assemblage suivant la revendication 3, caractérisé en ce que l'élément d'écartement (17, 53, 65, 92) est muni d'une surface d'écartement, au moins, destinée à l'élargissement radial de l'élément extensible.

5. Dispositif d'assemblage suivant l'une des revendications 3 et 4, caractérisé en ce que le boulon (10, 54, 57, 64, 71, 97) sert au déplacement axial de l'élément d'écartement dans l'élément extensible et, de ce fait, au serrage radial de l'élément extensible dans l'évidement.

6. Dispositif d'assemblage suivant la revendication 5, caractérisé en ce qu'un élément (11, 60, 68, 100), permettant le serrage avant la création de l'assemblage, est associé au boulon (10, 54, 57, 64, 71, 97).

7. Dispositif d'assemblage suivant l'une quelconque des revendications 1 à 6, caractérisé en ce que la partie, destinée à créer l'assemblage, est une partie filetée (15, 59, 67, 74, 101).

8. Dispositif d'assemblage suivant l'une quelconque des revendications 1 à 7, caractérisé en ce que le boulon (64, 71) est assemblé rigidement avec l'extrémité avant de l'élément d'écartement (65), l'élément (68) se composant d'un écrou qui peut être vissé, ou est vissé, sur le boulon (64, 71).

9. Dispositif d'assemblage suivant la revendication 8, caractérisé en ce que le boulon (64, 71) et l'élément d'écartement (65) sont réalisés d'une seule pièce.

10. Dispositif d'assemblage suivant l'une quelconque des revendications 1 à 7, caractérisé en ce que l'élément d'écartement (17, 53, 92) est réalisé en forme de douille et est muni d'une section taraudée (19, 96), le boulon (10, 54, 57, 97) présentant une première section filetée (14, 58, 99), qui peut être vissée dans l'extrémité avant de la section taraudée (19, 96), et l'élément (11, 60, 100) étant un embout monté ou fixé rigidement sur le boulon (10, 54, 57, 97).

11. Dispositif d'assemblage suivant l'une quelconque des revendications 7 à 10, caractérisé en ce que la partie filetée (59, 74) se compose d'une section taraudée, réalisée dans un évidement, ouvert vers l'avant, du boulon (57, 71).

12. Dispositif d'assemblage suivant l'une quelconque des revendications 7 à 10, caractérisé en ce que la partie filetée (15, 67, 101) se compose d'une seconde section filetée, réalisée sur l'extrémité avant du boulon (10, 64, 97).

13. Dispositif d'assemblage suivant l'une quelconque des revendications 1, 2 et 10 à 12, caractérisé en ce que l'élément (11, 60) se compose d'un collet périphérique.

14. Dispositif d'assemblage suivant l'une quelconque des revendications 1, 2 et 10 à 12, caractérisé en ce que le boulon (97) présente une section (98) faisant office de butée, l'élément (100) se composant d'un écrou qui s'applique sur cette section.

15. Dispositif d'assemblage suivant l'une quelconque des revendications 1 à 14, caractérisé en ce que l'élément (11, 60, 68) présente une section transversale adaptée à la pose d'un outil.

16. Dispositif d'assemblage suivant l'une quelconque des revendications 1 à 15, caractérisé en ce qu'il présente un moyen, qui s'oppose à une rotation de l'élément d'écartement (17, 65) dans l'élément extensible (1).

17. Dispositif d'assemblage suivant la revendication 16, caractérisé en ce que le moyen est réalisé à la manière d'un assemblage à rainure et languette.

18. Dispositif d'assemblage suivant la revendication 17, caractérisé en ce que le moyen comporte une fente (4) parallèle à l'axe ou une rainure parallèle à l'axe dans l'élément extensible (1), et une goupille (26, 69), pénétrant dans la fente (4) ou dans la rainure, sur l'élément d'écartement (17, 65).

19. Dispositif d'assemblage suivant l'une des revendications 17 et 18, caractérisé en ce que la fente (4) est fermée sur l'extrémité arrière, ou l'un des segments (2), du moins, est muni d'un cintrage sur l'extrémité arrière.

20. Dispositif d'assemblage suivant l'une quelconque des revendications 1 à 19, caractérisé en ce que l'élément extensible est formé de deux ou de plusieurs coques séparées les unes des autres.

21. Dispositif d'assemblage suivant l'une quelconque des revendications 1 à 20, caractérisé en ce que l'élément extensible (1) se compose de deux segments (2), au moins, séparés par une fente (4), au moins, parallèle à l'axe, et formant conjointement la surface d'enveloppe intérieure (8), conique, et une surface d'enveloppe extérieure (7), essentiellement cylindrique, et en ce que l'élément d'écartement (17) présente une surface d'écartement externe (18), concourant avec la surface d'enveloppe intérieure.

22. Dispositif d'assemblage suivant l'une quelconque des revendications 1 à 20, caractérisé en ce que l'élément extensible (81) se compose de deux segments (82), au moins, que sépare une fente cunéiforme (84), au moins, limitée par des surfaces latérales (86), et qui forment une surface d'enveloppe extérieure (87), essentiellement cylindrique, et en ce que l'élément d'écartement (92) présente un embout (93), au moins, pouvant être introduit dans la fente (84), avec des surfaces d'écartement (94) latérales, concourant avec les surfaces latérales (86).

23. Dispositif d'assemblage suivant l'une des revendications 21 et 22, caractérisé en ce que les segments (2, 82) sont maintenus par une bague (6, 77, 90), réalisée sur l'extrémité avant de l'élément extensible (1, 76, 81).

24. Dispositif d'assemblage suivant la revendication 23, caractérisé en ce que la bague (6, 90) présente une section transversale, adaptée à l'appui sur l'extrémité avant de l'extrémité de jonction du composant (22).

25. Dispositif d'assemblage suivant l'une des revendications 23 et 24, caractérisé en ce que la bague (6, 77, 90) présente une section transversale adaptée à la pose d'un outil.

26. Dispositif d'assemblage suivant l'une quelconque des revendications 23 à 25, caractérisé en ce que la bague (6, 90) est réalisée sous forme de pièce de centrage pour l'autre composant.

27. Dispositif d'assemblage suivant l'une quelconque des revendications 1 à 26, caractérisé en ce que l'élément extensible (1, 76, 81) se compose d'acier.

28. Dispositif d'assemblage suivant l'une quelconque des revendications 1 à 27, caractérisé en ce que les segments (2) sont assemblés avec la bague (6), sur leurs extrémités avant, au moyen d'éléments déformables (29).

29. Dispositif d'assemblage suivant la revendication 28, caractérisé en ce que les éléments déformables (29) se composent de minces profils de jonction ou d'éléments de paroi.
